# EUROPÄISCHE PATENTSCHRIFT

(11) **EP 1 894 802 B1**
(45) Veröffentlichungstag und Bekanntmachung des Hinweises auf die Patenterteilung: **10.08.2011**
(21) Anmeldenummer: 07016783.8
(22) Anmeldetag: 28.08.2007
(51) Int. Cl.: B60T 11/18, B60T 7/10

(54) **Hydraulische Gebereinrichtung**
Hydraulic dispenser device
Dispositif de transmetteur hydraulique

(30) Priorität: 30.08.2006 DE 102006041956
(43) Veröffentlichungstag der Anmeldung: 05.03.2008
(73) Patentinhaber: Gustav Magenwirth GmbH & Co. KG, 72574 Bad Urach (DE)
(72) Erfinder: Weiher, Franz, 72149 Neustetten (DE)
(74) Vertreter: Hoeger, Stellrecht & Partner Patentanwälte

(56) Entgegenhaltungen:
- EP-A2- 0 173 513
- EP-A2- 0 405 945
- DE-A1- 4 408 741
- US-A1- 2003 121 262

## Beschreibung

Die Erfindung betrifft eine hydraulische Gebereinrichtung für Fahrzeuge, insbesondere für lenkergeführte Fahrzeuge, umfassend ein Gehäuse mit einem hydraulischen Geberzylinder, in welchem ein bewegbarer Kolben angeordnet ist, einen relativ zum Gehäuse bewegbaren Betätigungshebel und einen eine Bewegung des Betätigungshebels auf den Kolben übertragenden Stößel, wobei der Stößel an dem Betätigungshebel abgestützt ist, wobei der Stößel durch Drehen um die Längsachse in Richtung derselben verstellbar ist und wobei der Stößel mittels einer Rasteinrichtung in bestimmten Drehstellungen um die Längsachse festlegbar ist.

Derartige hydraulische Gebereinrichtungen sind aus dem Stand der Technik, beispielsweise der DE 44 08 741 A1 bekannt.

Die bekannte Lösung hat jedoch den Nachteil, dass deren Montage aufwändig ist.

Der Erfindung liegt daher die Aufgabe zugrunde, eine hydraulische Gebereinrichtung zu schaffen, bei welcher die Montage derselben weniger aufwändig ist.

Diese Aufgabe wird bei einer hydraulischen Gebereinrichtung der eingangs beschriebenen Art erfindungsgemäß dadurch gelöst, dass die Rasteinrichtung ein Rastelement umfasst, dass das Rastelement mindestens einen Rastflügel trägt und dass der mindestens eine Rastflügel mit einer Rastfläche an einem von einem kreisrunden Querschnitt abweichenden Rastabschnitt des Stößels kraftbeaufschlagt und federnd anliegt.

Der Vorteil der erfindungsgemäßen Lösung ist darin zu sehen, dass bei dieser die Rasteinrichtung sehr einfach ausgebildet und montagefreundlich ist, da das Rastelement als einheitliche Baugruppe in einfacher Weise montiert werden kann.

Ein Ausführungsbeispiel der erfindungsgemäßen Lösung sieht dabei vor, dass der Stößel mit einem Gewindeabschnitt in einem Innengewinde der Rasteinrichtung aufgenommen ist.

Bei dieser Lösung kann die Rasteinrichtung insgesamt relativ zum Hebel verdrehbar sein, solange die Drehstellung des Stößels relativ zum Innengewinde der Rasteinrichtung durch das Rastelement aufrecht erhalten wird, denn in diesem Fall erfolgt keine Verstellung des Stößels in Richtung seiner Längsachse.

Hinsichtlich des Verdrehens des Stößels, um diesen in Richtung der Längsachse zu verstellen, ist es jedoch günstig, wenn die Rasteinrichtung drehfest mit dem Hebel verbunden ist, da damit in einfacher Weise ein Mitdrehen der Rasteinrichtung beim Verdrehen des Stößels verhindert werden kann.

Eine andere vorteilhafte Lösung sieht vor, dass der Stößel mit einem Gewindeabschnitt in einem Innengewinde eines Lagerkörpers aufgenommen ist.

Besonders günstig für die Abstützung des Stößels an dem Betätigungshebel ist es dabei, wenn der Stößel an dem Betätigungshebel durch den Lagerkörper abgestützt ist.

Um in vorteilhafter Weise ein Verdrehen des Stößels relativ zu dem das Innengewinde aufweisenden Lagerkörper zu verhindern, ist vorzugsweise vorgesehen, dass die Rasteinrichtung ein mit dem Lagerkörper drehfest verbundenes Rastelement umfasst, so dass der Stößel in bestimmten Drehstellungen relativ zum Lagerkörper um die Längsachse festlegbar ist.

Dabei könnte die Einheit aus Rastelement und Lagerkörper relativ zum Hebel frei drehbar sein.

Besonders günstig ist es jedoch, wenn der Lagerkörper oder das Rastelement oder beide drehfest mit dem Hebel verbunden sind.

Hinsichtlich der Ausbildung des Rastelements sind die unterschiedlichen Möglichkeiten denkbar.

So sieht eine vorteilhafte Lösung vor, dass das Rastelement den Rastabschnitt im Wesentlich umgreifend ausgebildet ist.

Hinsichtlich der Zahl der Rastflügel wurden bislang keine näheren Angaben gemacht. So ist es grundsätzlich ausreichend, einen Rastflügel vorzusehen.

Besonders günstig ist es, wenn das Rastelement mehrere Rastflügel trägt.

Die mehreren Rastflügel sind dabei vorzugsweise so ausgebildet, dass sie an dem Rastabschnitt an mehreren in Umfangsrichtung im Abstand voneinander liegenden Bereichen anliegen.

Eine besonders günstige Lösung sieht vor, dass der Rastabschnitt zwischen zwei Rastflügeln liegt.

Vorzugsweise sind dabei die Rastflügel schalenartig ausgebildet, um den Rastabschnitt zwischen diesen aufnehmen zu können.

Eine kostengünstige Lösung sieht vor, dass jeder Rastflügel als Teilabschnitt eines das Rastelement bildenden einstückigen Rastelementkörpers ausgebildet ist, so dass ein derartiges Rastelement besonders einfach und somit kostengünstig herstellbar ist.

In diesem Fall sind vorzugsweise die Rastflügel so ausgebildet, dass sie an einem dem Lagerkörper zugewandten Haltebereich des Rastelementkörpers radial fixiert sind und mit einem dem Lagerkörper abgewandten Ende radial zur Längsachse des Stößels elastisch bewegbar sind.

Eine andere vorteilhafte Lösung sieht vor, dass das Rastelement mindestens einen Rastflügel und einen diesen tragenden Trägerbereich umfasst.

Vorzugsweise ist dabei der Rastflügel nicht einstückig an einen Rastelementkörper angeformt, sondern so ausgebildet, dass der Rastflügel ein Schenkel eines U-förmigen Federbügels ist.

Hinsichtlich der Ausbildung des Rastabschnittes im Einzelnen wurden bislang keine näheren Angaben gemacht.

Ganz generell kann der Rastabschnitt so ausgebildet sein, dass er radial vorspringende Bereiche und zwischen diesen radial zurückgesetzte Bereiche aufweist.

Im einfachsten Fall sind die radial vorspringenden Bereiche durch Kanten gebildet.

Hinsichtlich der radial zurückgesetzten Bereiche wurden ebenfalls keine näheren Angaben gemacht. Beispielsweise können die radial zurückgesetzten Bereiche Vertiefungen sein, die sich zwischen den radial vorspringenden Bereichen, also beispielsweise den Kanten, erstrecken.

Im einfachsten Fall sind jedoch die radial zurückgesetzten Bereiche als Flachseiten des Rastabschnitts ausgebildet.

Eine besonders einfache Lösung sieht vor, dass der Rastabschnitt im Querschnitt als Vieleck ausgebildet ist.

Hinsichtlich der Verbindung zwischen dem Rastelement und dem Lagerkörper wurden bislang keinerlei Angaben gemacht. So sieht eine Lösung vor, dass das Rastelement fest mit dem Lagerkörper verbunden ist, beispielsweise durch eine Formschluss- oder eine Kraftschlussverbindung.

Eine zweckmäßige Ausführungsform sieht dabei vor, dass der Lagerkörper in eine Aufnahme, beispielsweise eine Aufnahmehülse, des Rastelements eingesetzt ist.

Es ist aber auch denkbar, den Lagerkörper als integrales Teil der Rasthülse auszubilden.

Eine einfache Lösung sieht vor, dass das Rastelement mit dem Lagerkörper verrastend ausgebildet ist.

In diesem Fall ist beispielsweise das Rastelement so ausgebildet, dass es mit dem Lagerkörper verrastbare Haltebügel aufweist.

Vorzugsweise sind dabei die Haltebügel so ausgebildet, dass sie den Lagerkörper umfangsseitig umgreifen.

Im Zusammenhang mit der bisherigen Beschreibung der einzelnen Ausführungsbeispiele wurden keine näheren Ausführungen zu der Anordnung des Lagerkörpers relativ zum Betätigungshebel gemacht.

Eine vorteilhafte Lösung sieht dabei vor, dass der Lagerkörper gegenüber dem Betätigungshebel drehfest geführt ist, so dass der Lagerkörper sich beim Verdrehen des Stößels zum Verschieben desselben nicht relativ zum Betätigungshebel verdrehen kann.

Ferner wurden im Zusammenhang der bisherigen Erläuterung der einzelnen Ausführungsbeispiele keine näheren Angaben zur Lagerung des Lagerkörpers am Betätigungshebel selbst gemacht.

Um einen ausreichenden Bewegungsweg für das Verschieben des Stößels zum Betätigen des Kolbens zu erhalten, ist vorzugsweise vorgesehen, dass der Lagerkörper an einem Druckarm des Betätigungshebels abgestützt ist.

Ferner ist vorzugsweise vorgesehen, dass der Lagerkörper schwenkbar an dem Druckarm abgestützt ist, so dass der Lagerkörper die Möglichkeit hat, bei der Betätigung des Kolbens seine Ausrichtung relativ zu dem Druckarm zu verändern.

Eine derartige schwenkbare Lagerung des Lagerkörpers kann in unterschiedlichster Art und Weise realisiert sein.

Eine Möglichkeit sieht vor, dass der Lagerkörper durch mindestens ein Drehlager an dem Druckarm gelagert ist.

Eine alternative Lösung hierzu sieht vor, dass der Lagerkörper auf einer Führungsfläche des Druckarms abgestützt ist.

Die Abstützung des Lagerkörpers auf der Führungsfläche kann einen ausreichenden Freiheitsgrad für eine Schwenkbewegung des Lagerkörpers und somit des Stößels ermöglichen.

Besonders vorteilhaft ist es jedoch, wenn der Lagerkörper durch ein an dem Druckarm angreifendes Führungselement drehfest an dem Druckarm geführt ist, so dass mit diesem Führungselement die Möglichkeit besteht, einerseits die schwenkbare Anordnung des Lagerkörpers relativ zum Druckarm zu realisieren und andererseits den Lagerkörper noch ausreichend definiert relativ zum Druckarm drehfest festzulegen.

Das Führungselement kann dabei in unterschiedlichster Art und Weise ausgebildet sein.

Eine konstruktiv besonders einfache Lösung sieht vor, dass das Führungselement an einer Außenfläche des Druckarms geführt ist.

Um eine definierte Schwenkbewegung durch das Führungselement zu gewährleisten ist ferner vorgesehen, dass die Außenfläche des Druckarms als zu einer Achse zylindrische Führungsfläche ausgebildet ist, so dass durch die Außenfläche im Zusammenhang mit dem Führungselement eine Schwenkbewegung des Lagerkörpers relativ zur Achse realisierbar ist.

Eine weitere vorteilhafte Ausführungsform der erfindungsgemäßen Gebereinrichtung sieht vor, dass das Rastelement eine Aufnahme für einen Schutzbalg aufweist.

Vorzugsweise ist dabei vorgesehen, dass ein auf dem Rastelement fixierbarer radial elastischer Haltering des Schutzbalgs die Rastflügel in Richtung des Rastabschnitts beaufschlagt.

Zweckmäßigerweise ist der Haltering so angeordnet, dass dieser an dem Rastelement in einem dem Lagerkörper abgewandten Endbereich angreift.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:

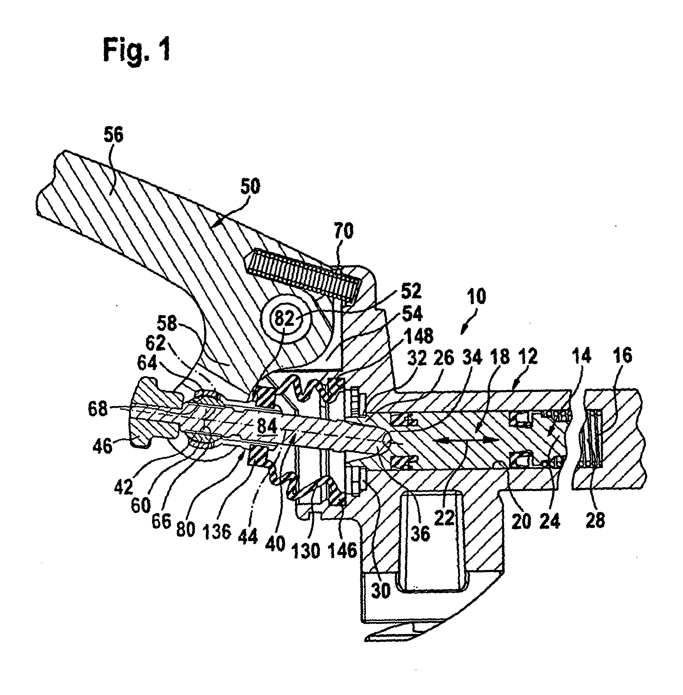

- Fig. 1: einen Längsschnitt durch eine erfindungsgemäße Gebereinrichtung mit einem Rastelement gemäß dem ersten Ausführungsbeispiel;
- Fig. 2: eine Draufsicht auf das erste Ausführungsbeispiel des erfindungsgemäßen Rastelements;
- Fig. 3: einen Schnitt längs Linie 3-3 in Fig. 2;
- Fig. 4: eine Ansicht des ersten Ausführungsbeispiels des Rastelements von Seiten des Lagerkörpers;
- Fig. 5: einen Schnitt längs Linie 5-5 in Fig. 4;
- Fig. 6: eine perspektivische Darstellung eines Rastelements eines zweiten Ausführungsbeispiels einer erfindungsgemäßen Gebereinrichtung;
- Fig. 7: eine Ansicht eines Bedienelements gemäß einem zweiten Ausführungsbeispiel der erfindungsgemäßen Gebereinrichtung in Richtung des Pfeils A in Fig. 6;
- Fig. 8: eine Ansicht des Rastelements des zweiten Ausführungsbeispiels der erfindungsgemäßen Gebereinrichtung mit Blick in Richtung des Pfeils B in Fig. 6 und
- Fig. 9: einen vergrößerten ausschnittsweisen Längsschnitt ähnlich Fig. 1 durch ein drittes Ausführungsbeispiel einer erfindungsgemäßen Gebereinrichtung.

Ein Ausführungsbeispiel einer erfindungsgemäßen Gebereinrichtung 10 für Fahrzeuge, insbesondere für lenkergeführte Fahrzeuge, umfasst ein an einem Lenker des Fahrzeugs montierbares Gehäuse 12, in welchem ein als Ganzes mit 14 bezeichneter Geberzylinder mit einer Zylinderkammer 16 und einem Kolben 18 vorgesehen ist, wobei der Kolben 18 in einer Kolbenbohrung 20 in einer Verschieberichtung 22 bewegbar geführt ist und eine der Zylinderkammer 16 zugewandte Druckseite 24 sowie eine der Druckseite 24 abgewandte Betätigungsseite 26 aufweist.

Der Kolben 18 ist ferner durch eine in der Zylinderkammer 16 angeordnete Druckfeder 28, welche auf die Druckseite 24 wirkt, beaufschlagt, so dass der Kolben das Bestreben hat, sich in der Verschieberichtung 22 in eine ein maximales Volumen der Zylinderkammer 16 zulassende Ausgangsstellung zu verschieben. In dieser Ausgangsstellung wird der Kolben 18 durch einen Anschlagring 30 gehalten, welcher den Kolben 18 auf der Betätigungsseite 26 umgibt und an welchem der Kolben 18 mit einer Stufe 32 anlegbar ist.

Auf der Betätigungsseite 26 ist der Kolben 18 mit einer im Querschnitt parabelähnlichen Vertiefung 34 versehen, in welche ein Kopf 36 eines als Ganzes mit 40 bezeichneten Stößels eingreift, der zur Übertragung einer durch einen Handhebel 50 erzeugbaren Betätigungsbewegung auf den Kolben 18 dient.

Der Handhebel 50 ist seinerseits über ein Gelenk 52 an dem Gehäuse 12, vorzugsweise an zwei Lagerflanschen 54 des Gehäuses 12, gelagert und erstreckt sich mit einem Betätigungsarm 56 von dem Gelenk 52 weg.

Ferner umfasst der Handhebel 50 einen sich ungefähr quer zum Betätigungsarm 56 erstreckenden Druckarm 58, an welchem ein Lagerkörper 60 um eine Schwenkachse 62 schwenkbar gelagert ist, wobei der Lagerkörper 60 beispielsweise in jedem von zwei im Abstand voneinander verlaufenden Flanschbereichen 65 des Druckarms 58 jeweils eine Lagerbohrung 64 in dem Druckarm 58 durchsetzt und dadurch beiderseits jeweils durch ein Drehlager 63 gelagert ist.

Der Lagerkörper 60 umfasst ferner eine quer zur Schwenkachse 62 verlaufende Bohrung 66 mit einem Innengewinde 68, welche der Stößel 40 durchgreift.

Hierzu weist der Stößel 40 einen Gewindeabschnitt 42 auf, der in das Innengewinde 68 eingreift, so dass der Stößel 40 bei Drehung um seine Längsachse 44 quer zur Schwenkachse 62 des Lagerkörpers 60 verschiebbar ist, und somit ist ein Abstand des Kopfes 36 des Stößels 40 von dem Lagerkörper 60 einstellbar.

Zum Drehen des Stößels 40 trägt dieser auf seiner dem Kopf 36 gegenüberliegenden Seite des Gewindeabschnitts 42 ein Handrad 46, welches somit auch auf einer dem Kopf 36 gegenüberliegenden Seite des Lagerkörpers 60 angeordnet ist.

Durch Drehen des Stößels 40 ist somit ein Ansprechen des Geberzylinders 14 in Abhängigkeit von der Stellung des Betätigungsarms 56 des Handhebels 50 einstellbar, wobei der Handhebel 50 vorzugsweise noch durch eine Druckfeder 70 beaufschlagt ist, welche den Handhebel 50 stets soweit verschwenkt hält, dass der Stößel 40 mit seinem Kopf 36 spielfrei in der Vertiefung 34 anliegt und somit ein Verschwenken des Handhebels 50 ausgehend von der unbetätigten Stellung unmittelbar zu einem Verschieben des Kolbens 18 unter Verkleinerung der Zylinderkammer 16 führt.

Um bei einer einmal durchgeführten Einstellung des Stößels 40, die somit der unbetätigten Stellung des Handhebels 50 entspricht, eine unbeabsichtigte Änderung der Einstellung zu verhindern, ist eine als Ganzes mit 80 bezeichnete Rasteinrichtung vorgesehen.

Die Rasteinrichtung 80 umfasst ein Rastelement 82, welches drehfest mit dem Lagerkörper 60 verbunden ist, sowie einen Rastabschnitt 84 des Stößels 40, welcher zwischen dem Gewindeabschnitt 42 und dem Kopf 36 des Stößels liegt und bezogen auf die Längsachse 44 eine von einer rotationssymmetrischen Form abweichende Form aufweist, beispielsweise als Mehrkant ausgebildet ist.

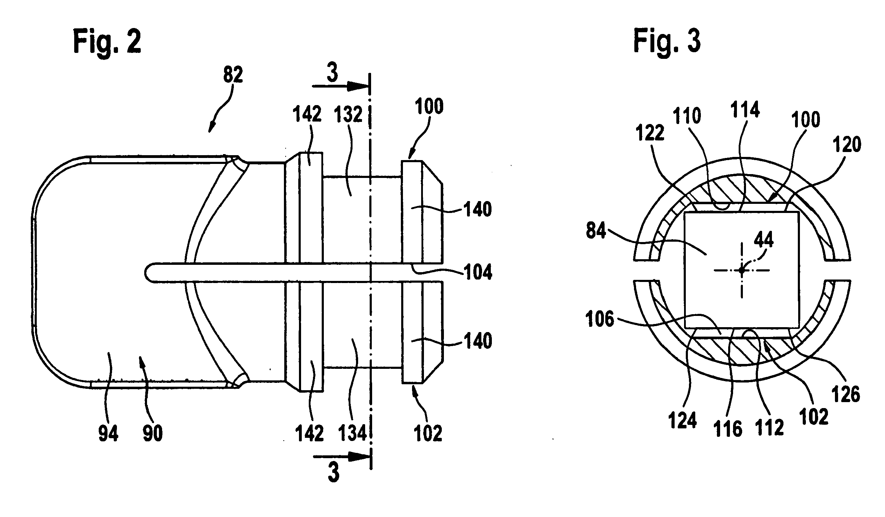

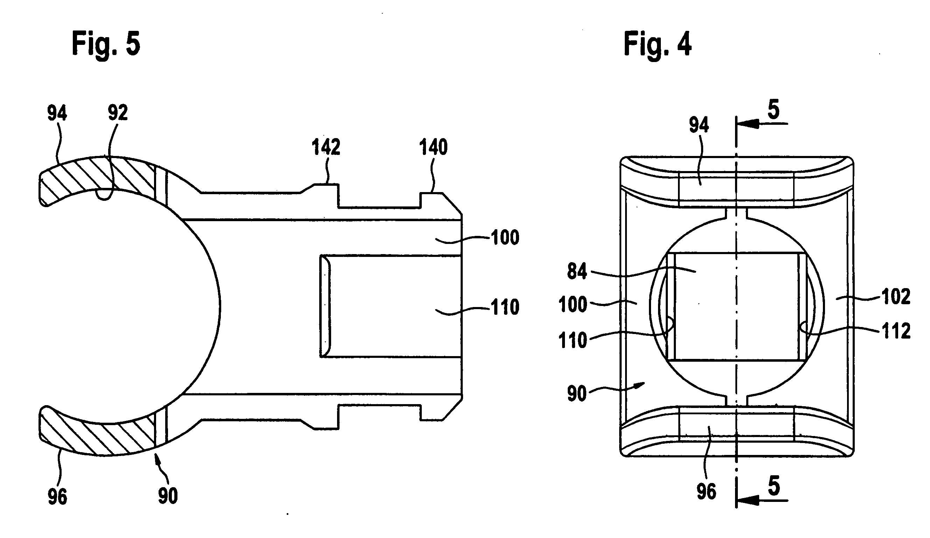

Ein erstes Ausführungsbeispiel eines Rastelements 82, dargestellt in den Figuren 2 bis 5, umfasst einen Haltebereich 90, welcher wie in Figur 2, 4 und 5 dargestellt, eine Aufnahme 92 für den Lagerkörper 60 aufweist, wobei die Aufnahme 92 durch Haltebügel 94, 96 gebildet ist, die in der Lage sind, den Lagerkörper 60 an seinem Außenumfang zu umfassen und damit das Rastelement 82 relativ zum Lagerköper 60 zu fixieren.

Von dem Haltebereich 90 ausgehend erstrecken sich dann halbschalenartig ausgebildete Rastflügel 100, 102, die sich unmittelbar ausgehend von den Haltebügeln 94, 96 von dem Haltebereich 90 weg erstrecken und durch einen Zwischenraum 104 voneinander getrennt sind, so dass die beiden Rastflügel 100, 102 lediglich über die Haltebügel 94, 96 miteinander verbunden sind.

Die Rastflügel 100, 102 umschließen einen Aufnahmeraum 106, in dem sich der Rastabschnitt 84 des Stößels 40 erstreckt und weisen ferner an den Aufnahmeraum 106 angrenzende und diesem zugewandte Rastflächen 110, 112 auf, welche zum Verrasten mit dem Rastabschnitt 84 an einander gegenüberliegenden Flachseiten 114, 116 des im Querschnitt als Mehrkant ausgebildeten Rastabschnitts 84 anliegen, um den Stößel 40 dadurch bezüglich der Längsachse 44 drehfest zwischen den Rastflügeln 100, 102 zu fixieren.

Aufgrund des Zwischenraums 104 haben die Rastflügel 100, 102 jedoch die Möglichkeit, radial zur Längsachse 44 auszuweichen, so dass ein Verstellen des Stößels 40 durch Drehen desselben um die Längsachse 44 möglich ist, wobei sich dann die seitlich der Flachseiten 114, 116 liegenden Kanten 120 und 122 bzw. 124 und 126 des Rastabschnitts 84 über die Rastflächen 110, 112 hinweg bewegen und die Rastflächen 100, 102 auseinander bewegen, so lange, bis die nächsten Flachseiten 114, 116 wieder den Rastflächen 110, 112 zugewandt sind.

Zum Fixieren eines Schutzbalgs 130 an dem Rastelement 82 sind die Rastflügel 100, 102 im Bereich ihrer dem Haltebereich 90 abgewandten Enden mit Aufnahmen 132, 134 für einen Haltering 136 versehen, wobei die Aufnahmen 132, 134 vorzugsweise als Vertiefungen begrenzt von jeweils einem Randwulst 140, 142 ausgebildet sind.

Der Schutzbalg 130 erstreckt sich dabei von dem Haltering 136 bis zu einem Haltering 146, welcher in eine Aufnahme 148 im Gehäuse 12 eingreift.

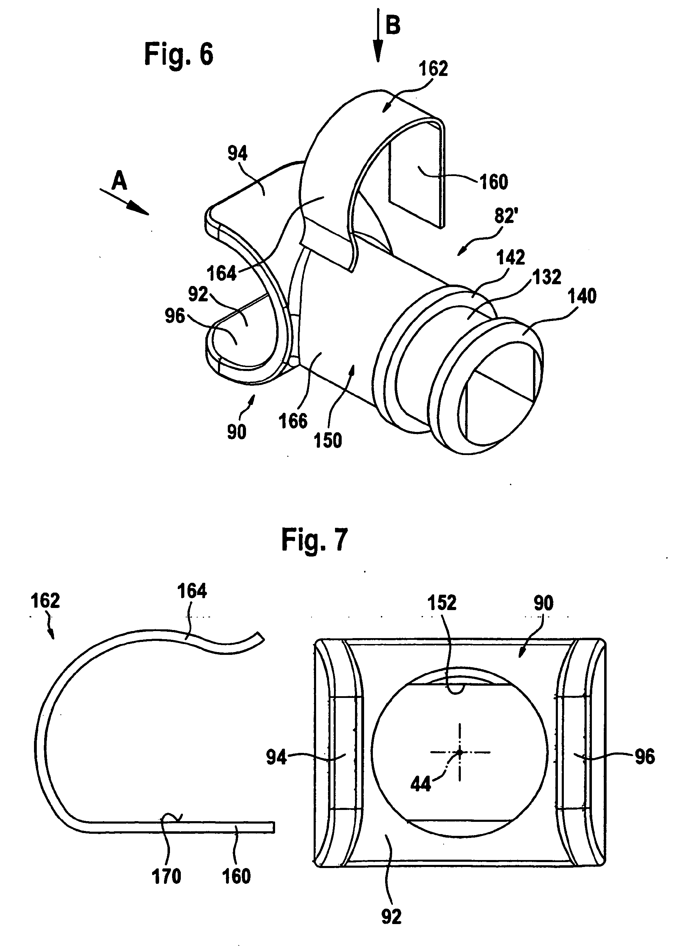

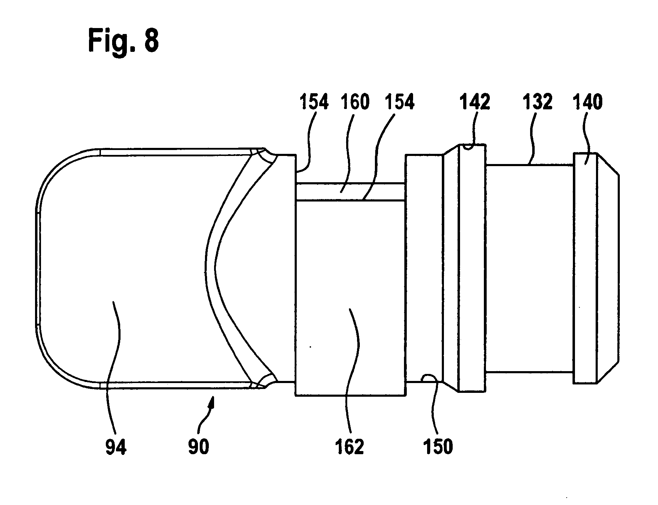

Bei einem Rastelement 82' eines zweiten Ausführungsbeispiels einer erfindungsgemäßen Gebereinrichtung, dargestellt in Figur 6 bis 8, sind diejenigen Teile, die mit denen des voranstehenden Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Insbesondere ist der Haltebereich 90 des Rastelements in gleicher Weise ausgebildet wie beim ersten Ausführungsbeispiel und umfasst die Haltebügel 94 und 96, welche die Aufnahme 92 für den Lagerkörper 60 bilden.

Im Gegensatz zum ersten Ausführungsbeispiel erstreckt sich ausgehend von dem Haltebereich 90 ein Trägerbereich 150, welcher einen Durchbruch 152 umschließt, den der Stößel 40 mit seinem Rastabschnitt 84 durchsetzt.

Vorzugsweise ist der Trägerbereich 150 hülsenähnlich ausgebildet und umfasst auf einer Seite eine seitliche Öffnung 154, durch welche ein Rastflügel 160 hindurchgreift, wobei der Rastflügel 160 dabei den Durchbruch 152 derart einseitig verengt, dass der Rastflügel 160 an einer der Flachseiten 114, 116 des Rastabschnitts 84 anliegt und somit eine Drehung des Rastabschnitts 84 in den Durchbruch 152 behindert.

Der Rastflügel 160 bildet einen Schenkel eines insgesamt ungefähr U-förmigen Federbügels 162, dessen anderer Schenkel 164 auf einer der Öffnung 154 gegenüberliegenden Außenseite 166 des Trägerbereich 150 aufliegt und somit ein Gegenlager für den Rastflügel 160 bildet, so dass der Rastflügel 160 durch den U-förmigen Federbügel 162 federelastisch in Richtung der Längsachse 44 des Stößels 40 vorgespannt über die Öffnung 154 in den Durchbruch 152 eingreift.

Damit ist ebenfalls ein Drehen des Stößels 40 mit seinem Rastabschnitt 84 möglich, wobei in diesem Fall ebenfalls die Kanten 120 bis 126 unter radialem nach Außenbiegen des Rastflügels 160 über eine Rastfläche 170 des Rastflügels 160 hinwegbewegbar sind.

In gleicher Weise wie das erste Ausführungsbeispiel umfasst das zweite Ausführungsbeispiel des erfindungsgemäßen Rastelements 82' noch die eine umlaufende Aufnahme 132 begrenzt durch jeweils einen Randwulst 140 und 142 für den Haltering 146 des Schutzbalgs 130.

Insgesamt funktioniert somit das Rastelement 82' des zweiten Ausführungsbeispiels in gleicher Weise wie das erste Ausführungsbeispiel des Rastelements 82, so dass hinsichtlich der weiteren Beschreibung vollinhaltlich auf die Ausführungen zum ersten Ausführungsbeispiel Bezug genommen werden kann.

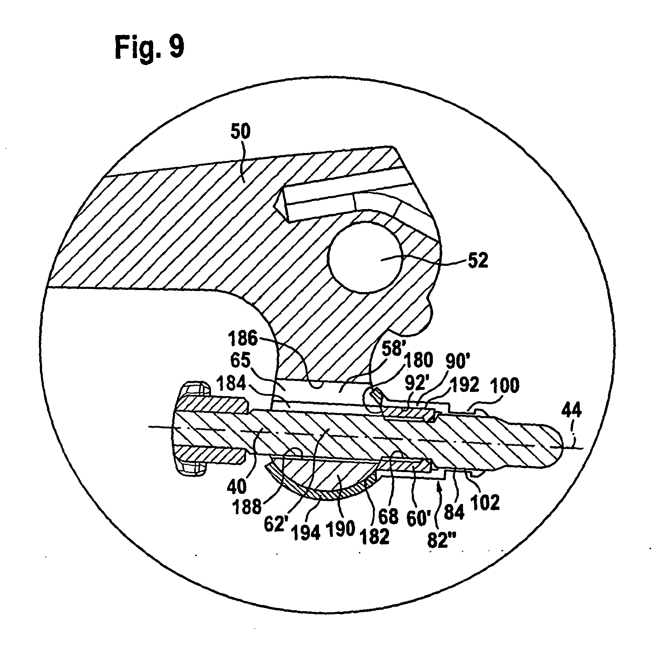

Bei einem dritten Ausführungsbeispiel einer erfindungsgemäßen hydraulischen Gebereinrichtung, dargestellt in Fig. 9 sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Im Gegensatz zu den voranstehenden Ausführungsbeispielen ist bei dem dritten Ausführungsbeispiel der Lagerkörper 60' nicht zwischen den Flanschbereichen 65 des Druckarms 58' angeordnet, sondern als Gewindehülse mit dem Innengewinde 68 ausgebildet, die mit einer Stirnseite 180 auf einer äußeren Führungsfläche 182 des Druckarms 58' aufsetzt, wobei die äußere Führungsfläche 182 durch die beiden Flanschbereiche 65 gebildet ist.

Bei dem dritten Ausführungsbeispiel erstreckt sich der Stößel 40 durch einen zwischen den Flanschbereichen 65 liegenden Durchbruch 184 hindurch, welcher jedoch lediglich den Stößel 40 beidseitig führt und ein beliebiges Verkippen des Stößels in einer ungefähr parallel zu den Flanschbereichen 65 liegenden und in Fig. 9 in der Zeichnungsebene liegenden Bewegungsebene des Stößels 40 zulässt, wobei allerdings die Bewegung des Stößels 40 durch quer zu der Bewegungsebene verlaufende Wandbereiche 186 und 188 begrenzt ist. Dabei verläuft der Wandbereich 186 auf einer dem Gelenk 52 zugewandten Seite des Stößels 40, während der Wandbereich 188 auf einer dem Gelenk 52 abgewandten Seite des Stößels 40 verläuft und durch einen Verbindungssteg 190 gebildet wird, welcher die beiden Flanschbereiche 65 auf ihrer dem Gelenk 52 abgewandten Seite des Stößels 40 miteinander verbindet.

Vorzugsweise ist der Verbindungssteg 190 einstückig mit den Flanschbereichen 65 ausgebildet und diese sind einstückig Teil des Handhebels 50.

Der Lagerkörper 60' hat vorzugsweise eine von einer kreisrunden Form abweichende Außenkontur 192, beispielsweise in Form eines Mehrkants, und diese ist in der als Aufnahmehülse ausgebildeten Aufnahme 92' des Rastelements 82" drehfest, vorzugsweise formschlüssig, aufgenommen, so dass der Lagerkörper 60' drehfest mit dem Rastelement 82" verbunden ist, dessen Rastflügel 100, 102 auf dem Rastabschnitt 84 des Stößels 40 anliegen und somit den Stößel 40 in seinen Drehstellungen relativ zum Lagerkörper 60' gegen ein freies Verdrehen fixieren.

Da bei diesem Ausführungsbeispiel der Lagerkörper 60' nur mit seiner Stirnseite 180 auf der Führungsfläche 182 aufliegt, fehlt eine Festlegung des Lagerkörpers 60', insbesondere eine drehfeste Festlegung des Lagerkörpers 60', relativ zu dem Druckarm 58' des Handhebels 50.

Hierzu ist bei dem dritten Ausführungsbeispiel ein als Ganzes mit 194 bezeichnetes Führungselement vorgesehen, welches an dem Druckarm 58' angreift.

Vorzugsweise ist das Führungselement 194 einstückig an das Rastelement 82", vorzugsweise einstückig an den die Aufnahme 92' bildenden Haltebereich 90', angeformt und umgreift den Druckarm 58' allerdings so, dass die gesamte Einheit aus Rastelement 82" und Lagerkörper 60' um eine virtuelle Achse 62' relativ zum Druckarm 58' verschwenkbar ist, wobei die virtuelle Achse 62' senkrecht zur Bewegungsebene für den Stößel 40 verläuft und wie beim ersten Ausführungsbeispiel senkrecht auf der Längsachse 44 des Stößels 40 steht.

Eine derartige Verschwenkbarkeit des Stößels 40 mitsamt dem Rastelement 82' und dem Lagerkörper 60' lässt sich am einfachsten dadurch realisieren, dass die Führungsfläche 182 als zur virtuellen Achse 62' zylindrisch verlaufende Fläche ausgebildet ist und dass das Führungselement 194 diese Führungsfläche 182 über einen ausreichend großen Winkelbereich bezogen auf die virtuelle Achse 62' umfasst.

Eine besonders exakte Führung ist dadurch möglich, dass das Führungselement 194 die zylindrisch ausgebildete Führungsfläche 182 über einen Winkelbereich von mehr als 180° umfasst, so dass dadurch eine der zylindrischen Form der Führungsfläche 182 folgende Führung für die Einheit aus Rastelement 82" und Lagerkörper 60' gegeben ist.

Alternativ zum Umfassen der Führungsfläche 182 durch das Führungselement 194 wäre es aber auch denkbar, die Flanschbereiche 65 auf ihren dem Durchbruch 184 abgewandten Außenseiten zu umfassen und dadurch eine drehfeste Festlegung der Einheit aus Rastelement 82" und Lagerkörper 60' zu gewährleisten.

Bei einer weiteren Variante des dritten Ausführungsbeispiels wäre es ebenfalls denkbar, das Führungselement 194 an dem Lagerkörper 60' festzulegen und das Rastelement 82" drehfest an dem Lagerkörper 60' zu fixieren.

Bei dem dargestellten dritten Ausführungsbeispiel ist das Lagerelement 60' ein vom Rastelement 82" getrenntes Teil, es ist aber auch denkbar, das Lagerelement 60' in das Rastelement 82' zu integrieren, und beide als einstückiges Teil auszuführen.

## Patentansprüche

1. Hydraulische Gebereinrichtung für Fahrzeuge; insbesondere für lenkergeführte Fahrzeuge, umfassend ein Gehäuse (12) mit einem hydraulischen Geberzylinder (14), in welchem ein bewegbarer Kolben (18) angeordnet ist,
einen relativ zu dem Gehäuse (12) bewegbaren Betätigungshebel (50), und einen eine Bewegung des Betätigungshebels (50) auf den Kolben (18) übertragenden Stößel (40), wobei der Stößel (40) an dem Betätigungshebel (50) abgestützt ist, wobei der Stößel (40) durch Drehen um eine Längsachse (44) in Richtung derselben verstellbar ist und wobei der Stößel (40) mittels einer Rasteinrichtung relativ zum Betätigungshebel (50) in bestimmten Drehstellungen um die Längsachse (44) festlegbar ist,
**dadurch gekennzeichnet, dass** die Rasteinrichtung (80) ein Rastelement (82) umfasst, dass das Rastelement (82) mindestens einen Rastflügel (100, 102, 160) trägt, und dass der mindestens eine Rastflügel (100, 102, 160) mit einer Rastfläche (110, 112, 170) an einem von einem kreisrunden Querschnitt abweichenden Rastabschnitt (84) des Stößels (40) kraftbeaufschlagt und federnd anliegt.

2. Gebereinrichtung nach Anspruch 1, **dadurch gekennzeichnet, dass** der Stößel (40) mit einem Gewindeabschnitt (42) in einem Innengewinde (68) der Rasteinrichtung (80) aufgenommen ist.

3. Gebereinrichtung nach Anspruch 2, **dadurch gekennzeichnet, dass** die Rasteinrichtung (80) drehfest mit dem Hebel (50) verbunden ist.

4. Gebereinrichtung nach Anspruch 1, **dadurch gekennzeichnet, dass** der Stößel (40) mit einem Gewindeabschnitt (42) in einem Innengewinde (68) eines Lagerkörpers (60, 60') aufgenommen ist.

5. Gebereinrichtung nach Anspruch 3, **dadurch gekennzeichnet, dass** der Stößel (40) an dem Betätigungshebel (50) durch den Lagerkörper (60, 60') abgestützt ist.

6. Gebereinrichtung nach Anspruch 4 oder 5, **dadurch gekennzeichnet, dass** die Rasteinrichtung (80) ein mit dem Lagerkörper (60, 60') drehfest verbundenes Rastelement (82, 82', 82") umfasst, so dass der Stößel (40) in bestimmten Drehstellungen relativ zum Lagerkörper (60, 60') um die Längsachse (44) festlegbar ist.

7. Gebereinrichtung nach einem der Ansprüche 4 bis 6, **dadurch gekennzeichnet, dass** der Lagerkörper (60, 60') und/oder das Rastelement (82, 82', 82") drehfest mit dem Hebel (50) verbunden sind.

8. Gebereinrichtung nach einem der voranstehenden Ansprüche, **dadurch gekennzeichnet, dass** das Rastelement (82, 82', 82") den Rastabschnitt (84) im Wesentlichen umgreifend ausgebildet ist.

9. Gebereinrichtung nach einem der voranstehenden Ansprüche, **dadurch gekennzeichnet, dass** das Rastelement (82, 82', 82") mehrere Rastflügel (100, 102) trägt.

10. Gebereinrichtung nach Anspruch 9, **dadurch gekennzeichnet, dass** die Rastflügel (100, 102) an dem Rastabschnitt (84) an mehreren in Umfangsrichtung im Abstand voneinander angeordneten Bereichen anliegen.

11. Gebereinrichtung nach einem der Ansprüche 9 oder 10, **dadurch gekennzeichnet, dass** der Rastabschnitt (84) zwischen zwei Rastflügeln (100, 102) liegt.

12. Gebereinrichtung nach Anspruch 11, **dadurch gekennzeichnet, dass** die Rastflügel (100, 102) schalenartig ausgebildet ist.

13. Gebereinrichtung nach einem der Ansprüche 8 bis 12, **dadurch gekennzeichnet, dass** jeder Rastflügel (100, 102) als Teilabschnitt eines das Rastelement (82, 82") bildenden einstückigen Rastelementkörpers ausgebildet ist.

14. Gebereinrichtung nach Anspruch 13, **dadurch gekennzeichnet, dass** die Rastflügel (100, 102) an einem dem Lagerkörper (60, 60') zugewandten Haltebereich (90) des Rastelements (82, 82") radial fixiert sind und mit einem dem Lagerkörper (60, 60') abgewandten Ende radial zur Längsachse (44) elastisch bewegbar sind.

15. Gebereinrichtung nach einem der Ansprüche 4 bis 7, **dadurch gekennzeichnet, dass** das Rastelement (82') mindestens einen Rastflügel (160) und einen diesen tragenden Trägerbereich (150) umfasst.

16. Gebereinrichtung nach Anspruch 15, **dadurch gekennzeichnet, dass** der mindestens eine Rastflügel (160) ein Schenkel eines U-förmigen Federbügels (162) ist.

17. Gebereinrichtung nach einem der voranstehenden Ansprüche, **dadurch gekennzeichnet, dass** der Rastabschnitt (84) radial vorspringende Bereiche (120, 122, 124, 126) und zwischen diesen radial zurückgesetzte Bereiche (114, 116) aufweist.

18. Gebereinrichtung nach Anspruch 17, **dadurch gekennzeichnet, dass** die radial vorspringenden Bereiche als Kanten (120, 122, 124, 126) ausgebildet sind.

19. Gebereinrichtung nach Anspruch 17 oder 18, **dadurch gekennzeichnet, dass** die radial zurückgesetzten Bereiche als Flachseiten (114, 116) ausgebildet sind.

20. Gebereinrichtung nach einem der Ansprüche 17 bis 19, **dadurch gekennzeichnet, dass** der Rastabschnitt (84) im Querschnitt als Vieleck ausgebildet ist.

21. Gebereinrichtung nach einem der voranstehenden Ansprüche, **dadurch gekennzeichnet, dass** das Rastelement (82) eine Aufnahme (92, 92') für den Lagerkörper (60, 60') aufweist.

22. Gebereinrichtung nach Anspruch 21, **dadurch gekennzeichnet, dass** der Lagerkörper (60') in die Aufnahme (92') eingesetzt ist.

23. Gebereinrichtung nach Anspruch 21, **dadurch gekennzeichnet, dass** die Aufnahme (92) mit dem Lagerkörper (60) verrastend verbindbar ist.

24. Gebereinrichtung nach Anspruch 23, **dadurch gekennzeichnet, dass** die Aufnahme (92) mit dem Lagerkörper (60) verrastbare Haltebügel (94, 96) aufweist.

25. Gebereinrichtung nach Anspruch 24, **dadurch gekennzeichnet, dass** die Haltebügel (94, 96) den Lagerkörper (60) umfangsseitig umgreifen.

26. Gebereinrichtung nach einem der voranstehenden Ansprüche, **dadurch gekennzeichnet, dass** der Lagerkörper (60, 60') gegenüber dem Betätigungshebel (50) drehfest geführt ist.

27. Gebereinrichtung nach einem der voranstehenden Ansprüche, **dadurch gekennzeichnet, dass** der Lagerkörper (60, 60') an einem Druckarm (58, 58') des Betätigungshebels (50) abgestützt ist.

28. Gebereinrichtung nach Anspruch 26 oder 27, **dadurch gekennzeichnet, dass** der Lagerkörper (60, 60') schwenkbar an dem Druckarm (58, 58') abgestützt ist.

29. Gebereinrichtung nach Anspruch 28, **dadurch gekennzeichnet, dass** der Lagerkörper (60) durch mindestens ein Drehlager (63) an dem Druckarm (58) gelagert ist.

30. Gebereinrichtung nach einem der Ansprüche 26 bis 28, **dadurch gekennzeichnet, dass** der Lagerkörper (60') auf einer Führungsfläche (182) des Druckarms (58') abgestützt ist.

31. Gebereinrichtung nach einem der Ansprüche 26 bis 28, und 30, **dadurch gekennzeichnet, dass** der Lagerkörper (60') durch ein an dem Druckarm (58') angreifendes Führungselement (194) drehfest an dem Druckarm (58') geführt ist.

32. Gebereinrichtung nach Anspruch 31, **dadurch gekennzeichnet, dass** das Führungselement (194) an einer Außenfläche (182) des Druckarms (58') geführt ist.

33. Gebereinrichtung nach Anspruch 32, **dadurch gekennzeichnet, dass** die Außenfläche als zu einer Achse (62') zylindrische Führungsfläche (182) ausgebildet ist.

34. Gebereinrichtung nach einem der voranstehenden Ansprüche, **dadurch gekennzeichnet, dass** das Rastelement (82, 82', 82") eine Aufnahme (132, 134) für einen Schutzbalg (130) aufweist.

35. Gebereinrichtung nach Anspruch 34, **dadurch gekennzeichnet, dass** ein auf dem Rastelement (82, 82', 82") fixierbarer radial elastischer Haltering (136) des Schutzbalgs (130) die Rastflügel (100, 102) in Richtung des Rastabschnitts (84) beaufschlagt.

36. Gebereinrichtung nach Anspruch 34 oder 35, **dadurch gekennzeichnet, dass** der Haltering (136) des Schutzbalgs (130) an dem Rastelement (82, 82', 82") in einem dem Lagerkörper (60, 60') abgewandten Endbereich angreift.

## Claims

1. Hydraulic transmitting device for vehicles, in particular for vehicles steered by handlebars, comprising a housing (12) with a hydraulic master cylinder (14), a displaceable piston (18) being arranged in said cylinder,
an actuating lever (50) movable relative to the housing (12) and a push rod (40) transferring movement of the actuating lever (50) to the piston (18), wherein the push rod (40) is supported on the actuating lever (50), wherein the push rod (40) is adjustable in the direction of a longitudinal axis (44) as a result of rotation about said axis and wherein the push rod (40) is securable relative to the actuating lever (50) in specific rotary positions around the longitudinal axis (44) by means of a locking device,
**characterized in that** the locking device (80) comprises a locking element (82), that the locking element (82) has at least one locking vane (100, 102, 160) and that the at least one locking vane (100, 102, 160) abuts with a locking surface (110, 112, 170) on a locking section (84) of the push rod (40) deviating from a circular cross section in a flexible manner and acted upon by a force.

2. Transmitting device as defined in claim 1, **characterized in that** the push rod (40) is accommodated in an internal thread (68) of the locking device (80) with a threaded section (42).

3. Transmitting device as defined in claim 2, **characterized in that** the locking device (80) is connected non-rotatably to the lever (50).

4. Transmitting device as defined in claim 1, **characterized in that** the push rod (40) is accommodated in an internal thread (68) of a bearing member (60, 60') with a threaded section (42).

5. Transmitting device as defined in claim 3, **characterized in that** the push rod (40) is supported on the actuating lever (50) by the bearing member (60, 60').

6. Transmitting device as defined in claim 4 or 5, **characterized in that** the locking device (80) comprises a locking element (82, 82', 82") connected non-rotatably to the bearing member (60, 60') such that the push rod (40) is securable relative to the bearing member (60, 60') in specific rotary positions around the longitudinal axis (44).

7. Transmitting device as defined in any one of claims 4 to 6, **characterized in that** the bearing member (60, 60') and/or the locking element (82, 82', 82") are connected non-rotatably to the lever (50).

8. Transmitting device as defined in any one of the preceding claims, **characterized in that** the locking element (82, 82', 82") is designed so as to engage essentially around the locking section (84).

9. Transmitting device as defined in any one of the preceding claims, **characterized in that** the locking element (82, 82', 82") has several locking vanes (100, 102).

10. Transmitting device as defined in claim 9, **characterized in that** the locking vanes (100, 102) abut on the locking section (84) at several areas arranged at a distance from one another in circumferential direction.

11. Transmitting device as defined in one of claims 9 or 10, **characterized in that** the locking section (84) is located between two locking vanes (100, 102).

12. Transmitting device as defined in claim 11, **characterized in that** the locking vanes (100, 102) are designed in the shape of shells.

13. Transmitting device as defined in any one of claims 8 to 12, **characterized in that** each locking vane (100, 102) is designed as a partial section of a one-piece locking element member forming the locking element (82, 82").

14. Transmitting device as defined in claim 13, **characterized in that** the locking vanes (100, 102) are fixed radially on a retaining area (90) of the locking element (82, 82") facing the bearing member (60, 60') and are elastically movable radially to the longitudinal axis (44) with an end facing away from the bearing member (60, 60').

15. Transmitting device as defined in any one of claims 4 to 7, **characterized in that** the locking element (82') comprises at least one locking vane (160) and a support area (150) supporting it.

16. Transmitting device as defined in claim 15, **characterized in that** the at least one locking vane (160) is an arm of a U-shaped spring clip (162).

17. Transmitting device as defined in any one of the preceding claims, **characterized in that** the locking section (84) has radially projecting areas (120, 122, 124, 126) and between them areas (114, 116) set back radially.

18. Transmitting device as defined in claim 17, **characterized in that** the radially projecting areas are designed as edges (120, 122, 124, 126).

19. Transmitting device as defined in claim 17 or 18, **characterized in that** the areas set back radially are designed as flat sides (114, 116).

20. Transmitting device as defined in any one of claims 17 to 19, **characterized in that** the locking section (84) is designed in cross section as a polygon.

21. Transmitting device as defined in any one of the preceding claims, **characterized in that** the locking element (82) has a receiving means (92, 92') for the bearing member (60, 60').

22. Transmitting device as defined in claim 21, **characterized in that** the bearing member (60') is inserted into the receiving means (92').

23. Transmitting device as defined in claim 21, **characterized in that** the receiving means (92) is connectable to the bearing member (60) in an interlocking manner.

24. Transmitting device as defined in claim 23, **characterized in that** the receiving means (92) has retaining clips (94, 96) interlockable with the bearing member (60).

25. Transmitting device as defined in claim 24, **characterized in that** the retaining clips (94, 96) engage around the bearing member (60) on the circumferential side.

26. Transmitting device as defined in any one of the preceding claims, **characterized in that** the bearing member (60, 60') is guided in a non-rotational manner in relation to the actuating lever (50).

27. Transmitting device as defined in any one of the preceding claims, **characterized in that** the bearing member (60, 60') is supported on a pressure arm (58, 58') of the actuating lever (50).

28. Transmitting device as defined in claim 26 or 27, **characterized in that** the bearing member (60, 60') is supported on the pressure arm (58, 58') so as to be pivotable.

29. Transmitting device as defined in claim 28, **characterized in that** the bearing member (60) is mounted on the pressure arm (58) by at least one rotary bearing (63).

30. Transmitting device as defined in any one of claims 26 to 28, **characterized in that** the bearing member (60') is supported on a guide surface (182) of the pressure arm (58').

31. Transmitting device as defined in any one of claims 26 to 28 and 30, **characterized in that** the bearing member (60') is guided on the pressure arm (58') in a non-rotational manner by a guide element (194) engaging on the pressure arm (58').

32. Transmitting device as defined in claim 31, **characterized in that** the guide element (194) is guided on an outer surface (182) of the pressure arm (58').

33. Transmitting device as defined in claim 32, **characterized in that** the outer surface is designed as a guide surface (182) cylindrical in relation to an axis (62').

34. Transmitting device as defined in any one of the preceding claims, **characterized in that** the locking element (82, 82', 82") has a receiving means (132, 134) for a protective bellows (130).

35. Transmitting device as defined in claim 34, **characterized in that** a retaining ring (136) of the protective bellows (130) acts on the locking vanes (100, 102) in the direction of the locking section (84), said retaining ring being radially elastic and fixable to the locking element (82, 82', 82").

36. Transmitting device as defined in claim 34 or 35, **characterized in that** the retaining ring (136) of the protective bellows (130) engages on the locking element (82, 82', 82") in an end area facing away from the bearing member (60, 60').

## Revendications

1. Dispositif de transmetteur hydraulique pour véhicules, en particulier pour véhicules guidés par des guidons, comprenant un boîtier (12) doté d'un vérin de transmetteur (14) hydraulique, dans lequel un piston mobile (18) est disposé,
un levier d'actionnement (50) mobile par rapport au boîtier (12), et un poussoir (40) transmettant un mouvement du levier d'actionnement (50) au piston (18), sachant que le poussoir (40) est en appui contre le levier d'actionnement (50), sachant que le poussoir (40) est réglable par rotation autour d'un axe longitudinal (44) en direction de celui-ci et sachant que le poussoir (40) peut être fixé à l'aide d'un dispositif d'encliquetage par rapport au levier d'actionnement (50) dans des positions de rotation déterminées autour de l'axe longitudinal (44),
**caractérisé en ce que** le dispositif d'encliquetage (80) comporte un élément d'encliquetage (82), **en ce que** l'élément d'encliquetage (82) porte au moins une aile d'encliquetage (100, 102, 160) et **en ce qu'**au moins une aile d'encliquetage (100, 102, 160) est soumise à l'action d'une force et repose élastiquement par une surface d'encliquetage (110, 112, 170) sur une section d'encliquetage (84) qui diverge d'une section circulaire du poussoir (40).

2. Dispositif de transmetteur selon la revendication 1, **caractérisé en ce que** le poussoir (40) est reçu par une section filetée (42) dans un filetage intérieur (68) du dispositif d'encliquetage (80).

3. Dispositif de transmetteur selon la revendication 2, **caractérisé en ce que** le dispositif d'encliquetage (80) est relié de manière solidaire en rotation au levier (50).

4. Dispositif de transmetteur selon la revendication 1, **caractérisé en ce que** le poussoir (40) est reçu par une section filetée (42) dans un filetage intérieur (68) d'un corps de palier (60, 60').

5. Dispositif de transmetteur selon la revendication 3, **caractérisé en ce que** le poussoir (40) est en appui contre le levier d'actionnement (50) par le corps de palier (60, 60').

6. Dispositif de transmetteur selon la revendication 4 ou 5, **caractérisé en ce que** le dispositif d'encliquetage (80) comporte un élément d'encliquetage (82, 82', 82") relié de manière solidaire en rotation avec le corps de palier (60, 60') de sorte que le poussoir (40) puisse être fixé dans des positions de rotation déterminées par rapport au corps de palier (60, 60') autour de l'axe longitudinal (44).

7. Dispositif de transmetteur selon l'une quelconque des revendications 4 à 6, **caractérisé en ce que** le corps de palier (60, 60') et/ou l'élément d'encliquetage (82, 82', 82") sont reliés de manière solidaire en rotation avec le levier (50).

8. Dispositif de transmetteur selon l'une quelconque des revendications précédentes, **caractérisé en ce que** l'élément d'encliquetage (82, 82', 82") est réalisé de manière à entourer sensiblement la section d'encliquetage (84).

9. Dispositif de transmetteur selon l'une quelconque des revendications précédentes, **caractérisé en ce que** l'élément d'encliquetage (82, 82', 82") porte plusieurs ailes d'encliquetage (100, 102).

10. Dispositif de transmetteur selon la revendication 9, **caractérisé en ce que** les ailes d'encliquetage (100, 102) reposent sur la section d'encliquetage (84) contre plusieurs zones disposées à distance les unes des autres dans le sens périphérique.

11. Dispositif de transmetteur selon l'une quelconque des revendications 9 ou 10, **caractérisé en ce que** la section d'encliquetage (84) se situe entre deux ailes d'encliquetage (100, 102).

12. Dispositif de transmetteur selon la revendication 11, **caractérisé en ce que** l'aile d'encliquetage (100, 102) est réalisée comme une coque.

13. Dispositif de transmetteur selon l'une quelconque des revendications 8 à 12, **caractérisé en ce que** chaque aile d'encliquetage (100, 102) est réalisée comme une section partielle d'un corps d'élément d'encliquetage en une seule partie formant l'élément d'encliquetage (82, 82").

14. Dispositif de transmetteur selon la revendication 13, **caractérisé en ce que** les ailes d'encliquetage (100, 102) sont fixées radialement sur une zone de retenue (90), tournée vers le corps de palier (60, 60'), de l'élément d'encliquetage (82, 82" et peuvent être déplacées élastiquement par une extrémité éloignée du corps de palier (60, 60') dans le sens radial vers l'axe longitudinal (44).

15. Dispositif de transmetteur selon l'une quelconque des revendications 4 à 7, **caractérisé en ce que** l'élément d'encliquetage (82') comporte au moins une aile d'encliquetage (160) et une zone de support (150) la portant.

16. Dispositif de transmetteur selon la revendication 15, **caractérisé en ce qu'**au moins une aile d'encliquetage (160) est une branche d'un étrier de ressort en U (162).

17. Dispositif de transmetteur selon l'une quelconque des revendications précédentes, **caractérisé en ce que** la section d'encliquetage (84) présente des zones (120, 122, 124, 126) en saillie dans le sens radial et entre celles-ci des zones (114, 116) en retrait dans le sens radial.

18. Dispositif de transmetteur selon la revendication 17, **caractérisé en ce que** les zones en saillie dans le sens radial sont réalisées comme des arêtes (120, 122, 124, 126).

19. Dispositif de transmetteur selon la revendication 17 ou 18, **caractérisé en ce que** les zones en retrait dans le sens radial sont réalisées comme des côtés plats (114, 116).

20. Dispositif de transmetteur selon l'une quelconque des revendications 17 à 19, **caractérisé en ce que** la section transversale de la section d'encliquetage (84) est réalisée comme un polygone.

21. Dispositif de transmetteur selon l'une quelconque des revendications précédentes, **caractérisé en ce que** l'élément d'encliquetage (82) présente un logement (92, 92") pour le corps de palier (60, 60').

22. Dispositif de transmetteur selon la revendication 21, **caractérisé en ce que** le corps de palier (60') est inséré dans le logement (92').

23. Dispositif de transmetteur selon la revendication 21, **caractérisé en ce que** le logement (92) peut être relié par encliquetage au corps de palier (60).

24. Dispositif de transmetteur selon la revendication 23, **caractérisé en ce que** le logement (92) présente des étriers de retenue (94, 96) pouvant être encliquetés avec le corps de palier (60).

25. Dispositif de transmetteur selon la revendication 24, **caractérisé en ce que** les étriers de retenue (94, 96) entourent côté périphérie le corps de palier (60).

26. Dispositif de transmetteur selon l'une quelconque des revendications précédentes, **caractérisé en ce que** le corps de palier (60, 60') est guidé de manière solidaire en rotation par rapport au levier d'actionnement (50).

27. Dispositif de transmetteur selon l'une quelconque des revendications précédentes, **caractérisé en ce que** le corps de palier (60, 60') est en appui contre un bras de compression (58, 58') du levier d'actionnement (50).

28. Dispositif de transmetteur selon la revendication 26 ou 27, **caractérisé en ce que** le corps de palier (60, 60') est en appui de manière à pouvoir pivoter contre le bras de compression (58, 58').

29. Dispositif de transmetteur selon la revendication 28, **caractérisé en ce que** le corps de palier (60) est logé par au moins un coussinet de pivotement (63) sur le bras de compression (58).

30. Dispositif de transmetteur selon l'une quelconque des revendications 26 à 28, **caractérisé en ce que** le corps de palier (60') est en appui sur une surface de guidage (182) du bras de compression (58').

31. Dispositif de transmetteur selon l'une quelconque des revendications 26 à 28 et 30, **caractérisé en ce que** le corps de palier (60') est guidé de manière solidaire en rotation sur le bras de compression (58') par un élément de guidage (194) agissant sur le bras de compression (58').

32. Dispositif de transmetteur selon la revendication 31, **caractérisé en ce que** l'élément de guidage (194) est guidé sur une surface extérieure (182) du bras de compression (58').

33. Dispositif de transmetteur selon la revendication 32, **caractérisé en ce que** la surface extérieure est réalisée comme une surface de guidage (182) cylindrique par rapport à un axe (62').

34. Dispositif de transmetteur selon l'une quelconque des revendications précédentes, **caractérisé en ce que** l'élément d'encliquetage (82, 82', 82") présente un logement (132, 134) pour un soufflet de protection (130).

35. Dispositif de transmetteur selon la revendication 34, **caractérisé en ce qu'**un anneau de retenue (136) élastique dans le sens radial, pouvant être fixé sur l'élément d'encliquetage (82, 82', 82") du soufflet protecteur (130) sollicite les ailes d'encliquetage (100, 102) en direction de la section d'encliquetage (84).

36. Dispositif de transmetteur selon la revendication 34 ou 35, **caractérisé en ce que** l'anneau de retenue (136) du soufflet protecteur (130) agit sur l'élément d'encliquetage (82, 82', 82") dans une zone d'extrémité éloignée du corps de palier (60, 60').
